(19) Europäisches Patentamt / European Patent Office / Office européen des brevets

(11) **EP 3 404 741 B1**

(12) **EUROPEAN PATENT SPECIFICATION**

(45) Date of publication and mention
of the grant of the patent:
**04.12.2019 Bulletin 2019/49**

(21) Application number: **17170962.9**

(22) Date of filing: **15.05.2017**

(51) Int Cl.:
*H01M 2/34* *(2006.01)*   *H01M 10/42* *(2006.01)*
*H01M 10/6556* *(2014.01)*   *H01M 10/613* *(2014.01)*
*H01M 10/44* *(2006.01)*   *H02J 7/00* *(2006.01)*

(54) **BATTERY SYSTEM**

BATTERIESYSTEM

SYSTÈME DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.11.2018 Bulletin 2018/47**

(73) Proprietors:
• **Robert Bosch GmbH
70442 Stuttgart (DE)**
• **GS Yuasa International Ltd.
Kisshoin, Minami-ku,
Kyoto-shi, Kyoto 601-8520 (JP)**

(72) Inventors:
• **Deromelaere, Gaetan
Kyoto, Kyoto 602-8042 (JP)**

• **Friedrich, Marco
71638 Ludwigsburg (DE)**

(74) Representative: **Isarpatent
Patent- und Rechtsanwälte Behnisch Barth
Charles
Hassa Peckmann & Partner mbB
Postfach 44 01 51
80750 München (DE)**

(56) References cited:
EP-A2- 2 053 717    WO-A1-2016/121315
DE-A1-102010 008 010    DE-A1-102013 226 179
DE-U- 6 604 183

## Description

The present invention related to a battery system.

DE 10 2010 008 010 A1 discloses a battery system comprising at least two batteries, each battery having a first terminal and a second terminal to supply electric voltage, wherein for each battery the first terminal and the second terminal of the same battery are electricly connected to an electroconductive element via separate switching elements, wherein each switching element is adapted to selectively connect the first terminal or the second terminal to the electroconductive element or isolate the first terminal or the second terminal from the electroconductive element, and wherein each switching element is adapted to connect each first terminal or the second terminal to the electroconductive element independent from other switching elements.

From the prior art, battery systems are known. Such battery systems usually comprise the Li-ion battery cells which have a high energy density. However, when such battery cells exceed a critical temperature, for example due to Joule heating at an internal short or nail penetration position, exothermic chemical reactions may be initiated between the electrodes and the electrolyte, raising the cells internal pressure and temperature. The increased temperature accelerates those chemical reactions producing even more heat. Therefore, such a process may lead to thermal runaway, a catastrophic cell behavior that cannot be controlled.

A possible measure to prevent such catastrophic cell behavior is providing a fast discharge device. Such a fast discharge device is known from the prior art, for example from DE 10 2012 005 979 B4. The principle of such a device is to externally shorten the cell between the cell terminals. In this way, electrical current flowing around the nail penetration location or internal short location is reduced due to an external low resistance current path as the resistance path inside the cell is expected to have comparably higher resistance.

From the prior art, particularly from the above-mentioned document, it is known to employ such fast discharge devices for each battery cell. Therefore, the safety of using batteries including Li-ion battery cells is increased. However, on the same time the costs for manufacturing, the weight, and the volume of the batteries are increased.

Further, an overcharge safety device for protecting a battery cell from catastrophic behavior due to overcharge is known from DE 10 2013 204 526 A1. From US 2012/187914 A1, a method for controlling a battery system is known, in which a control unit disconnects a battery module from an external load and discharges the battery module in case abnormal operation of the battery module is recognized.

Disclosure of the invention

The battery system according to the invention as defined in claim 1 allows increasing safety of battery systems including several battery cells, particularly Li-ion battery cells. In the same way, the costs for manufacturing, the weight, and the volume of the batteries are increased less than in the prior art. Therefore, the terminals of single batteries, which include at least one, preferably several, battery cells are selectively connected to an electroconductive element, which preferably has to be provided in the battery system for other, particularly structural, reasons. In this way, the number of fast discharging devices is reduced and the volume of the fast discharging device itself is reduced as well. Further, the manufacturing of the battery system is simplified thereby reducing manufacturing costs.

The battery system according to the invention comprises at least two batteries, wherein each battery preferably has at least one battery cell. Each battery further comprises a first terminal and a second terminal for supplying the electrical voltage, the voltage particularly being provided by the at least one battery cell. The at least one battery cell is particularly adapted to generate electrical voltage via a chemical reaction. Preferably, several battery cells are electrically connected in serial or parallel manner in order to set up the battery. For each battery, the first terminal and the second terminal of the same battery are electrically connected to an electroconductive element via separate switching elements. This means, that each terminal of one battery is connected to the electroconductive element via a separate switching element. It has to be noted that this does not exclude the case that one switching element connects terminals of two or more batteries to the electroconductive element. The term separate particularly has to be understood in a way that the two switching element are independent from each other, while the switching elements can be of the same type or can be of different types. Further, each switching element is adapted to selectively either connect the first terminal or the second terminal to the electroconductive element or isolate the first terminal or second terminal from the electroconductive element. In case the first terminal or the second terminal is connected to the electroconductive element, an electrical current may flow from the first contact element or second contact element to the electroconductive element. Each switching element is adapted to connect each first terminal or second terminal to the electroconductive element independent from the other switching elements. Therefore, no further busbars have to be provided as in the prior art. On the contrary, in order to discharge a specific battery, the respective switching elements have to be closed such that the terminals of the battery, which is to be discharged, are connected to the electroconductive element. This causes an electrical current flowing between said terminals via the electroconductive element. Hence, the battery can be discharged in the same way as described in view of a single cell in the above mentioned prior art document.

The batteries are connected in series. Therefore, a first boundary battery and a second boundary battery are provided, which define the boundaries of the serial connection. This means that the first boundary battery and the second boundary battery are only connected to one further battery, wherein all other batteries are connected to two further batteries. In such a design, the first terminal of each battery except for the first boundary battery is connected to the second terminal of another battery. The first terminal of the first boundary battery and the second terminal of the second boundary battery supply the overall voltage of the connected batteries. That means, that external devices have to be connected to said terminals. The switching elements are provided for connecting the first terminals of all batteries and the second terminal of the second boundary battery to the electroconductive element. Since every second terminal except for the second terminal of the second boundary battery are connected to one of the first terminals of another battery, each second terminal can selectively be connected to the electroconductive element via actuation of the switching element provided at the first terminal of the adjacent battery. However, since the second terminal of the second boundary battery is not in contact with another first terminal, the second terminal of the second boundary battery is connected to the electroconductive element via an own switching element. Therefore, each battery can be discharged by actuating two of the switching elements. With actuation of two of the switching elements, the first terminal and second terminal of one battery can be connected to the electroconductive element. In case at least two adjacent batteries have to be discharged, the first terminal of the first battery to be discharged and the second terminal of the last battery to be discharged have to be connected to the electroconductive element. Hence, the battery system allows very flexible possibilities to discharge one ore more batteries.

The second terminal of each battery except for the second boundary battery is electrically connected to the electroconductive element only via the first terminal of such another battery the second terminal is in contact with. This means each first terminal is directly connected to the electroconductive element, while the second terminal is connected to the electroconductive element via the first terminal of an adjacent battery, which the second terminal is in contact with. Hence, in order to connect said second terminal, the switching element provided between the electroconductive element and the first terminal of said adjacent battery has to be actuated. Therefore, the total number of switching elements is equal to the number of batteries plus one, since a further switching element has to be provided for the second terminal of the second boundary battery. Due to such a design, the number of switching element is minimized thereby reducing complexity of the battery system. This leads to a compact volume and low manufacturing costs.

The first terminal and the second terminal of each battery correspond to at least a part of an outer surface of the battery. At least one part of said outer surface is electrically connected to the electroconductive element via the switching element. Particularly, the first terminal corresponds to a first half of the outer surface, while the second terminal corresponds to a second half of the outer surface of the battery. The two halves of the outer surface are electrically isolated. This allows connecting the batteries in serial or parallel manner rather simply. Further, the switching element can be provided on at least parts of the half of the outer surface thereby increasing the area of the battery in contact with the electroconductive element. This provides a low resistance electrical current path.

The dependent claims contain advantageous embodiments of the present invention. The electroconductive element preferably is a plate, particularly a metal plate, which is in contact with at least a part of an outer surface of the batteries. Again, the contact area between the battery and the electroconductive element is maximized thereby reducing the electrical resistance of the connection between the electroconductive element and the respective terminal of the battery and/or allowing optimized heat dissipation from the battery.

It is particularly preferred that the electroconductive element is a cooling plate. The cooling plate is adapted to cool the batteries. The cooling plate preferably includes cooling channels for carrying a cooling fluid. Therefore, the cooling plate is provided for two different purposes. A first purpose is to cool the batteries, while a second purpose is to establish a low resistance current path between the terminals of a battery in case the battery has to be discharged. Since the cooling plate comprises an active cooling system, the battery system can not overheat when the high currents flow while discharging one of the batteries. On the contrary, the heat generated within the cooling plate by the discharge current will be dissipated immediately. With the combination of functionality, the number of parts inside the battery system is reduced thereby reducing manufacturing costs and an overall volume of the battery system.

Preferably, each switching element comprises a heating element, at least one isolating layer, and preferably at least one solder layer. The isolating layer isolates the electroconductive element from the first terminal or the second terminal. The heating element is adapted to melt the isolating layer and/or the solder layer. In this way, the electroconductive element and the first terminal or the second terminal are electrically connected. In case of the solder layer, this connection is established by a soldering process. In case no solder layer is provided, the first terminal or second terminal and the electroconductive element are preferably pressed together. The isolating element can be a polymeric foil which can disintegrate. The heating element can be a heating wire or can be an energy saving foil. In case of the heating wire, the isolating layer and/or the solder layer can be molten by activating the heating wire. In case of the energy saving foil, the isolating layer has to be selectively shortcut such that a current flowing through the energy saving foil creates heat which causes the isolating layer and/or the solder layer to melt. In both cases, the isolating capacity of the isolating layer is destroyed and a current path is established.

In an alternative embodiment, the switching element preferably is a semiconductor device. The semiconductor device is provided in a plate-like shape and can be provided between the respective terminal and the electroconductive element. The semiconductor device preferably is set up like a well-known MOSFET transistor, but is adapted to bear high currents. Therefore, the terminal can repeatedly be connected to and isolated from the electroconductive element.

Finally, it is preferred that the electroconductive element has an electrical resistance between 20 $\mu\Omega$ and 150 $\mu\Omega$, particularly 50 $\mu\Omega$ and 100 $\mu\Omega$. Further, it is preferred that the switching element has an electrical resistance of at most 50 $\mu\Omega$, particularly at most 30 $\mu\Omega$. Due to such parameters, the current path established after closing two of the switching elements, has a low electrical resistance thereby being able to carry high currents. Therefore, the battery can be discharged in a fast manner and can be transferred to a save state quickly.

Description of the drawings

Further aspects, advantages and embodiments are described together with the attached drawings. In the drawings,

Figure 1     is a schematic view of a general overview of a battery system according to a first embodiment of the invention,

Figure 2     is a schematic view of a working principle of discharging a battery of the battery system according to the first embodiment of the invention,

Figure 3     is a schematic view of two different alternatives of the switching element of the battery system according to the first embodiment of the invention,

Figure 4     is a schematic view of a detail of the of the battery system according to the first embodiment of the invention,

Figure 5     is a schematic view of a three-dimensional representation of a part of the of the battery system according to the first embodiment of the invention,

Figure 6     is a schematic view of a battery system according to an example which is not part of the invention,

Figure 7     is a schematic circuit diagram of the battery system according to the example which is not part of the invention,

Figure 8     is a schematic circuit diagram of a first alternative of providing the switching element in the battery system according to the first or second embodiment, and

Figure 9     is a schematic circuit diagram of a second alternative of providing the switching element in the battery system according to the first or second embodiment.

Embodiments of the invention

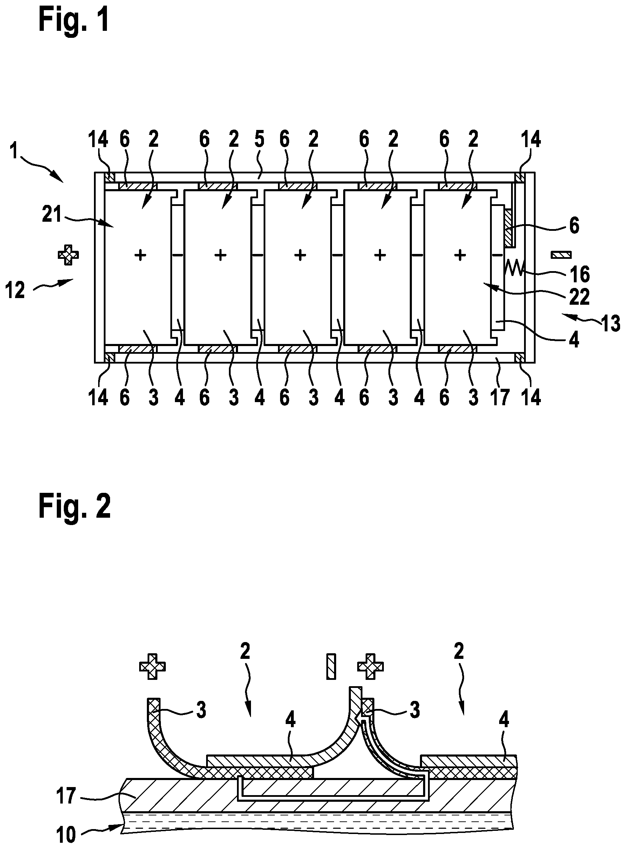

Figure 1 is a schematic view of a general overview of a battery system 1 according to a first embodiment of the invention. The battery system 1 includes a plurality of batteries 2, wherein each battery 2 comprises at least one battery cell (not shown). Further, each battery comprises a first terminal 3 and a second terminal 4, wherein the first terminal 3 and second terminal 4 supply electrical voltage provided by the battery cells.

The battery system 1 additionally comprises an electroconductive element 17. The electroconductive element 17 is part of a holder holding the battery system 1. Particularly, the electroconductive element 17 is made from metal. Said holder further comprises a first side element 12 and a second side element 13, wherein the first side element 12 and the second side element 13 supply a resulting voltage, which is provided by the plurality of batteries 2. The first side element 12 and the second side element 13 are separated from each other via nonconducting spacers 14.

The plurality of batteries is connected in a serial manner. This means, a first boundary battery 21 and a second boundary battery 22 are provided. The first terminal 3 of the first boundary battery 21 is electrically connected to the first side element 12, while the second terminal 4 of the second boundary battery 22 is electrically connected to the second side element 13. Further, each second terminal 4 of all batteries 2 except for the second boundary battery 22 is electrically connected to one first terminal 3 of another battery 2. In this way, the serial connection between the batteries 2 is realized. In order to provide a low resistance contact, the batteries 2 are pressed onto each other via an elastic element 16.

The electroconductive element 17 is electrically connected to each first terminal 3 of the batteries 2 via a switching element 6. The switching element 6 is adapted to selectively connect the first terminal 3 and the electroconductive element 17 or to isolate the first terminal 3 from the electroconductive element 17. Further, the second terminal 4 of the second boundary battery 22 is electrically connected to the electroconductive element 17 via a switching element 6. Such a design allows to shortcut the first terminal 3 and the second terminal 4 of every battery 2 independent from all other batteries 2. At the same time, the total number of switching elements 6 is minimized.

As soon as a battery 2 has to be discharged, the switching element 6 corresponding to the first terminal 3 of the battery 2 is actuated. Additionally, the switching element 6 corresponding to an adjacent battery 2, to which the second terminal 4 of the battery 2, which is to be discharged, is connected, is actuated. In case the battery 2 to be discharged is the second boundary battery 22, the two switching elements 6 corresponding to the first terminal 3 and second terminal 4 are actuated.

After actuating the switching elements 6, which causes the switching elements 6 to connect the respective terminals 3, 4 and the electroconductive element 17, a current can flow to discharge the battery 2. This is schematically shown in figure 2. In this figure, two adjacent batteries 2 are shown. Due to actuating the respective switching elements 6, the respective first terminals 3 are electrically connected to the electroconductive element 17. A current can flow from the first terminal 3 of the (left) battery 2 via the electroconductive element 17 to the first terminal 3 of the adjacent (right) battery 2 and therefore to the second terminal 4 of the (left) battery 2. In this way, the battery 2 can be discharged by actuating the switching element 6 corresponding to said battery 2 and the switching element 6 corresponding to the adjacent battery 2. Due to a large contact area between the first terminals 3 and the electroconductive element, a high current can flow such that the battery 2 can be discharged in a fast manner. This allows transferring the battery 2 into a safe state in a short time.

The switching elements 6 as shown in figure 1 provide the possibility to flexibly discharge one or more batteries 2 in case these batteries 2 are damaged or reach a critical state. Further, due to the minimized number of switching elements 6, the battery system 20 has a reduced volume and time and costs for manufacturing the battery system 20 are low.

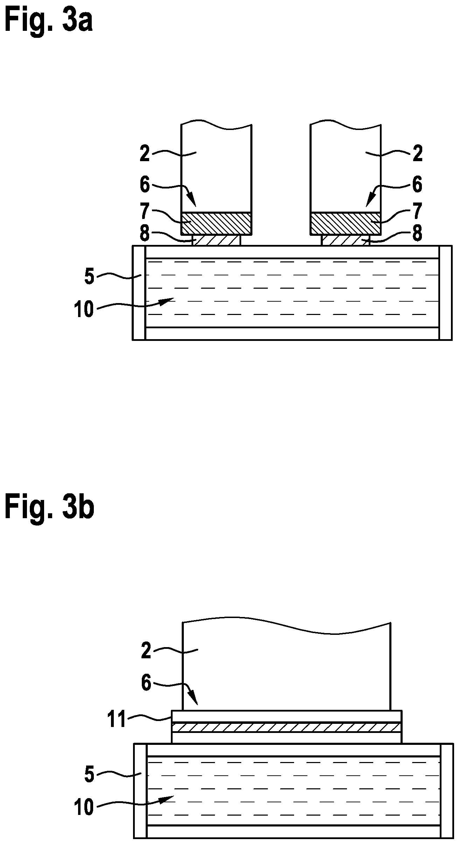

Figure 3 discloses two different options of providing the switching element 6. Further in this case, the electroconductive element 17 is a cooling plate 5. The cooling plate 5 preferably is made from metal and comprises a fluid path 10 carrying a cooling fluid. Therefore, the cooling plate 5 has a large contact area to the batteries 2, which is also beneficial for electrical connection between each battery 2, particularly the first terminal 3 of the battery 2, and the cooling plate 5.

Figure 3a is a schematic view of an option in which the switching element 6 comprises a heating element 7 and an isolating element 8. The heating element 7 preferably is a heating wire. The heating element 7 is adapted to disintegrate the isolating element 8 and to thereby connect the first terminal 3 of the battery 2 and the cooling plate 5. This is an irreversible process. Additionally, a solder layer (not shown) can be provided in order to melt the solder by the heating element 7 and to establish a low resistance connection between the first terminal 3 and the cooling plate 5 due to a soldering process.

Figure 3b is a schematic view of another option in which the switching element 6 is a semiconductor device 11. The semiconductor device is provided between the cooling plate 5 and each battery 2, particularly the first terminal 3 of each battery 2. The semiconductor device 11 is shaped plate-like and works similar to a well-known MOSFET. Hence, the connection between first terminal 3 and cooling plate 5 is reversible.

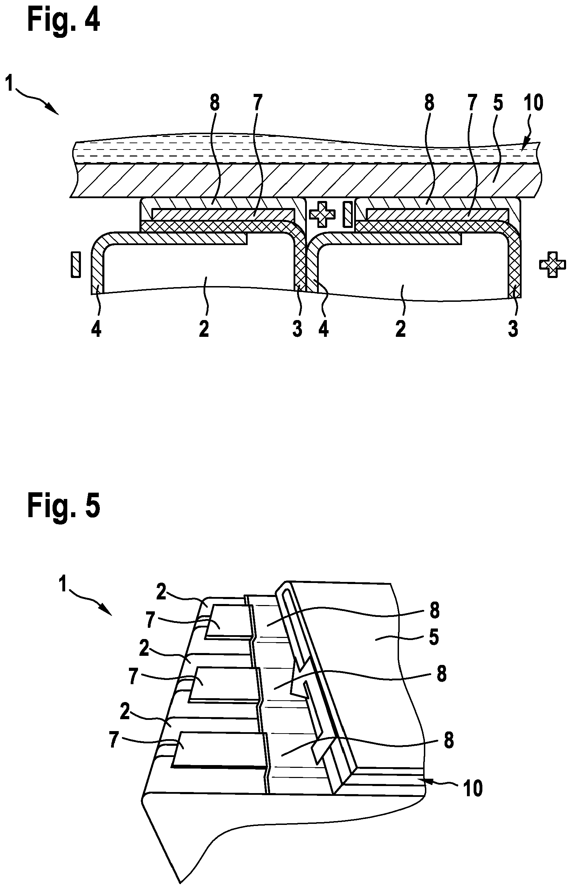

Figure 4 is a schematic view showing a detail of the battery system 20 according to the first embodiment. Figure 5 is a three-dimensional representation of the detail of the battery system 20 in a partly broken view. The battery system 20 included a cooling plate 5 which represents the electroconductive element 17 shown in figure 1. The cooling plate 5 has at least one cooling path 10 for carrying cooling fluid. Therefore, heat generated inside the cooling plate 5 due to currents flowing from one switching element 6 to another switching element 6 is dissipated via the cooling fluid. Hence, overheat of the battery system 20 is avoided even in case more than one battery 2 is discharged at the same time.

On each first terminal 3 of the batteries 2, a heating element 7 is provided. Between the heating element 7 and the cooling plate 5, an isolating element 8 is formed. Therefore, no electrical connection is established between the first terminals 3 and the cooling plate 5. Each of the heating elements 7 can be heated individually, such that each of the isolating elements 8 can be disintegrated individually. Therefore, each battery 2 can be discharged by heating the respective heating elements 7, which represents the above described actuation of the switching elements 6. After such heating, a current can flow as shown in figure 2.

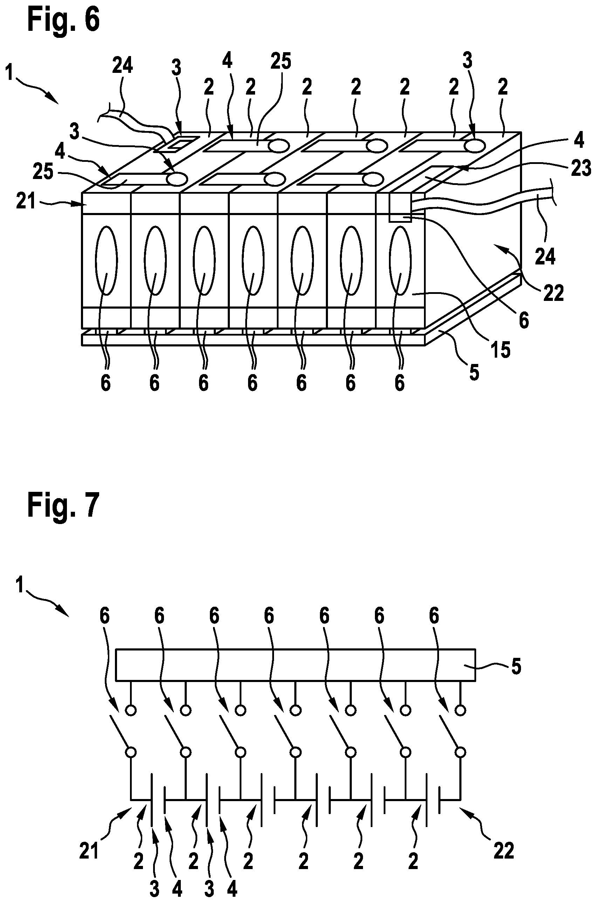

Figure 6 is a schematic view of the battery system 20 according to an example which is not part of the invention. Figure 7 is a schematic circuit diagram of the battery system 20 according to the example.

In the example, the batteries 2 are again connected in a serial manner such that a first boundary battery 21 and a second boundary battery 22 as explained above are provided.

In the example, the batteries 2 comprise a first terminal 3 and a second terminal 4, wherein the first terminal 3 is connected to the housing of the batteries 2. In between two adjacent batteries 2, an isolating element is provided. Coupling elements 25, particularly busbars, are provided to electrically connect the first terminal 3 of one battery 1 with the second terminal 4 of another battery 2. The first terminal 23 of the first boundary battery 21 can be connected to an external device 24, since said terminal is not connected to any other second terminal 4. In the same way, the second terminal 4 of the second boundary battery 22 is connected to the external device 24 since the said terminal is not connected to any other first terminal 3.

Further, in the example, the electroconductive element 17 can be represented by a cooling plate 5 and/or a clamping element 15. Although figure 6 shows both possibilities, figure 7 only shows the cooling plate 5. The clamping element 15 preferably is made from metal and is provided to clamp the batteries 2 together. Connecting the respective first terminals 3 to the clamping element 15 via switching elements 6 corresponds to connecting the first terminals 3 to the cooling plate 5 via switching elements 6 as explained above. Connecting the second terminal 4 of the second boundary battery 22 to the cooling plate 5 and/or clamping element 15 is preferably performed via a switching element 6 provided between a connecting plate 23 for contacting the external device 24, e.g. an external current line, and the cooling plate 5 and/or clamping element 15. In figure 6, only the connection to the clamping element 5 is shown. In another alternative, the connecting plate 23 can be connected to the housing of the battery 2 via the switching element 6. In this case, no further switching element 6 has to be actuated in order to shortcut the second boundary battery 22.

Discharging single batteries 2 of the battery system 1 according to the example is equal to discharging batteries 2 of the battery system 1 according to the first embodiment. Two switching elements 6 have to be actuated in order to connect the respective terminals 3, 4 to the cooling plate 5 or the clamping element 15. The cooling plate 5 and the clamping element 15 can then be employed to establish a low resistance current path.

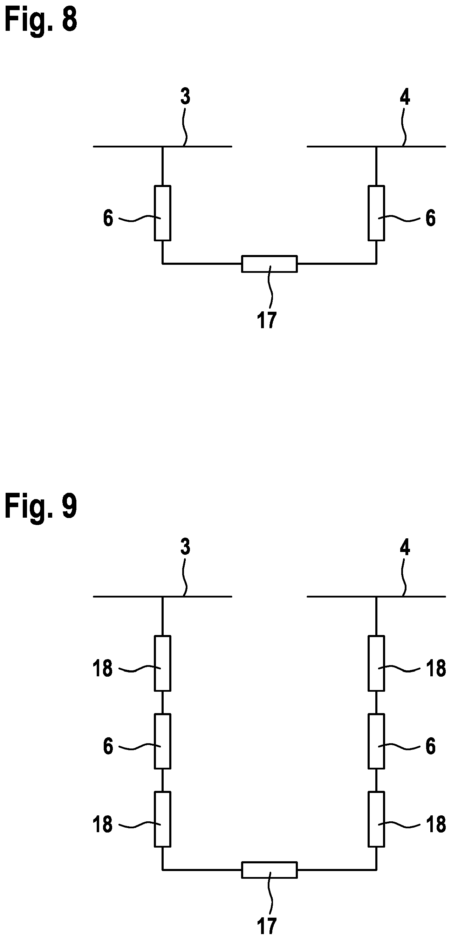

Figures 8 and 9 are schematic circuit diagrams showing two alternatives of providing the switching elements 6 in the battery system 1. In Figure 8 the switching elements 6 are directly connected to the electroconductive element 17 and the first terminal 3 or second terminal 4. Such a direct contact can be established via a soldering process or welding process. A total electrical resistance of a current path between a first terminal 3 and a second terminal 4 sums up to the resistances of two switching elements 6 and the resistance of the electroconductive element.

In a preferred embodiment, the resistance of the switching elements 6 is 30 $\mu\Omega$. while the resistance of the electroconductive element 17 is 50 $\mu\Omega$. Hence, the total resistance sums up to

$$30 \ \mu\Omega + 50 \ \mu\Omega + 30 \ \mu\Omega = 110 \ \mu\Omega$$

Therefore, the electrical resistance is minimized. However, this requires material junction between the switching elements 6 and the respective battery terminals 3, 4 as well as the electroconductive element 17.

Another option is to provide the switching elements 6 as separate parts and to press the switching elements 6 onto the batteries 2 as well as onto the electroconductive element 17. Such a pressing force is usually provided to the batteries 2 of common battery systems since this is beneficial for low thermal resistivity. Particularly, the electroconductive element 17 itself can be provided for supplying such pressure, such that the second invention of the present embodiment can simply be realized by including the switching elements 6 between the clamping element 15 and the batteries 2.

However, due to the clamping, a contact resistance 18 of about 15 $\mu\Omega$ applies. Additionally, since the electroconductive element 17, i.e. the clamping element 15 and/or the cooling plate 5, might have an electrical resistance up to 100 $\mu\Omega$.

Therefore, a maximum total resistance sums up to

$$15 \ \mu\Omega + 30 \ \mu\Omega + 15 \ \mu\Omega + 100 \ \mu\Omega + 15 \ \mu\Omega + 30 \ \mu\Omega + 15 \ \mu\Omega = 220 \ \mu\Omega$$

Hence, the total resistance of the current path will have a value between 110 $\mu\Omega$ and 220 $\mu\Omega$. Preferably, the battery system can comprise both, switching elements 6 contacted by material junction or contacted by clamping. In both cases, a current path can be established to discharge each battery 2 of the battery system 1 while at the same time the overall volume as well as the manufacturing effort is minimized.

**Claims**

**1.** Battery system (1) comprising:

- at least two batteries (2), each battery (2) having a first terminal (3) and a second terminal (4) to supply electrical voltage,
- wherein, for each battery (2), the first terminal (3) and the second terminal (4) of the same battery (2) are electrically connectable to an electroconductive element (17) via two separate switching elements (6) for discharging each battery (2) via the electroconductive element (17),

• wherein each switching element (6) is adapted to selectively connect the first terminal (3) to the electroconductive element (17) or isolate the first terminal (3) from the electroconductive element (17),

• wherein each switching element (6) is adapted to connect each first terminal (3) to the electroconductive element (17) independent from the other switching elements (6),

• the batteries (2) are connected in series such that the first terminal (3) of each battery (2) except for a first boundary battery (21) is connected to the second terminal (4) of another battery (2),

• wherein the first terminal (3) of the first boundary battery (21) and the second terminal (4) of a second boundary battery (22) supply the overall voltage of the connected batteries (2),

• wherein the switching elements (6) are provided for connecting the first terminals (3) of all batteries (2) and the second terminal (4) of the second boundary battery (22) to the electroconductive element (17),

• wherein the second terminal (4) of each battery (2) except for the second boundary battery (22) is electrically connectable to the electroconductive element (17) only via the first terminal (3) of an adjacent battery (2) the second terminal (4) is in contact with, and

• wherein the first terminal (3) and the second terminal (4) of each battery (2) correspond to at least a part of an outer surface of the battery (2), wherein at least a part of said outer surface corresponding to the first terminal (3) is electrically connectable to the electroconductive element (17) via the switching element (6).

2. Battery system (1) according to claim 1, **characterized in that** the electroconductive element (17) is a plate, particularly a metal plate, which is in contact with at least a part of an outer surface of the batteries (2).

3. Battery system (1) according to claim 2, **characterized in that** the electroconductive element (17) is a cooling plate (5) adapted for cooling the batteries (2), wherein the cooling plate (5) preferably includes cooling channels (10) for carrying a cooling fluid.

4. Battery system (1) according to any one of the previous claims, **characterized in that**

• each switching element (6) comprises a heating element (7), at least one isolating layer (8), and preferably at least one solder layer,

• wherein the isolating layer (8) isolates the electroconductive element (17) from the first terminal (3), and

• wherein the heating element (7) is adapted to melt the isolating layer (8) and/or the solder layer (9) such that the electroconductive element (17) and the first terminal (3) are electrically connected.

5. Battery system (1) according to any one of claims 1 to 4, **characterized in that** the switching element (6) is a semiconductor device (11).

6. Battery system (1) according to any one of the previous claims, **characterized in that** the electroconductive element (17) has an electrical resistance between 20 $\mu\Omega$ and 150 $\mu\Omega$, particularly 50 $\mu\Omega$ and 100 $\mu\Omega$, and/or the switching elements (6) have an electrical resistance of at most 50 $\mu\Omega$, particularly at most 30 $\mu\Omega$.

**Patentansprüche**

1. Batteriesystem (1), umfassend:

• mindestens zwei Batterien (2), wobei jede Batterie (2) einen ersten Anschluss (3) und einen zweiten Anschluss (4) zur Versorgung mit elektrischer Spannung aufweist,

• wobei für jede Batterie (2) der erste Anschluss (3) und der zweite Anschluss (4) der gleichen Batterie (2) über zwei getrennte Schaltelemente (6) mit einem elektrisch leitfähigen Element (17) zum Entladen jeder Batterie (2) über das elektrisch leitfähige Element (17) elektrisch verbindbar sind,

• wobei jedes Schaltelement (6) angepasst ist, um den ersten Anschluss (3) selektiv mit dem elektrisch leitfähigen Element (17) zu verbinden oder den ersten Anschluss (3) von dem elektrisch leitfähigen Element (17) zu isolieren,

• wobei jedes Schaltelement (6) angepasst ist, um jeden ersten Anschluss (3) unabhängig von den anderen Schaltelementen (6) mit dem elektrisch leitfähigen Element (17) zu verbinden,

• die Batterien (2) in Reihe geschaltet sind, so dass der erste Anschluss (3) jeder Batterie (2) mit Ausnahme einer ersten Grenzbatterie (21) mit dem zweiten Anschluss (4) einer anderen Batterie (2) verbunden ist,

• wobei der erste Anschluss (3) der ersten Grenzbatterie (21) und der zweite Anschluss (4) einer zweiten Grenzbatterie (22) die Gesamtspannung der angeschlossenen Batterien (2) liefern,

• wobei die Schaltelemente (6) zum Verbinden der ersten Anschlüsse (3) aller Batterien (2) und der zweiten Anschlüsse (4) der zweiten Grenzbatterie (22) mit dem elektrisch leitfähigen Element (17) vorgesehen sind,
• wobei der zweite Anschluss (4) jeder Batterie (2) mit Ausnahme der zweiten Grenzbatterie (22) nur über den ersten Anschluss (3) einer benachbarten Batterie (2) mit der der zweite Anschluss (4) in Kontakt steht mit dem elektrisch leitfähigen Element (17) verbindbar ist, und
• wobei der erste Anschluss (3) und der zweite Anschluss (4) jeder Batterie (2) mindestens einem Teil einer Außenfläche der Batterie (2) entsprechen, wobei mindestens ein Teil der Außenfläche, der dem ersten Anschluss (3) entspricht, über das Schaltelement (6) elektrisch mit dem elektrisch leitfähigen Element (17) verbindbar ist.

2. Batteriesystem (1) nach Anspruch 1, **dadurch gekennzeichnet, dass** das elektrisch leitfähige Element (17) eine Platte, insbesondere eine Metallplatte, ist, die mit mindestens einem Teil einer Außenfläche der Batterien (2) in Kontakt steht.

3. Batteriesystem (1) nach Anspruch 2, **dadurch gekennzeichnet, dass** das elektrisch leitfähige Element (17) eine Kühlplatte (5) ist, die zum Kühlen der Batterien (2) angepasst ist, wobei die Kühlplatte (5) bevorzugt Kühlkanäle (10) zum Tragen einer Kühlflüssigkeit beinhaltet.

4. Batteriesystem (1) nach einem der vorhergehenden Ansprüche, **dadurch gekennzeichnet, dass**

• jedes Schaltelement (6) ein Heizelement (7), mindestens eine Isolierschicht (8) und vorzugsweise mindestens eine Lötschicht umfasst,
• wobei die Isolierschicht (8) das elektrisch leitfähige Element (17) von dem ersten Anschluss (3) isoliert, und
• wobei das Heizelement (7) angepasst ist, um die Isolierschicht (8) und/oder die Lötschicht (9) so zu schmelzen, dass das elektrisch leitfähige Element (17) und der erste Anschluss (3) elektrisch verbunden sind.

5. Batteriesystem (1) nach einem der Ansprüche 1 bis 4, **dadurch gekennzeichnet, dass** das Schaltelement (6) eine Halbleitervorrichtung (11) ist.

6. Batteriesystem (1) nach einem der vorstehenden Ansprüche, **dadurch gekennzeichnet, dass** das elektrisch leitfähige Element (17) einen elektrischen Widerstand zwischen 20 $\mu\Omega$ und 150 $\mu\Omega$, insbesondere 50 $\mu\Omega$ und 100 $\mu\Omega$, aufweist und/oder die Schaltelemente (6) einen elektrischen Widerstand von höchstens 50 $\mu\Omega$, insbesondere höchstens 30 $\mu\Omega$ aufweisen.

**Revendications**

1. Système de batterie (1), comprenant :

• au moins deux batteries (2), chaque batterie (2) présentant une première borne (3) et une deuxième borne (4) pour fournir une tension électrique,
• dans lequel, pour chaque batterie (2), la première borne (3) et la deuxième borne (4) de la même batterie (2) peuvent être électriquement connectées à un élément électroconducteur (17) par l'intermédiaire de deux éléments de commutation (6) séparés pour décharger chaque batterie (2) par l'intermédiaire de l'élément électroconducteur (17),
• dans lequel chaque élément de commutation (6) est adapté pour connecter sélectivement la première borne (3) à l'élément électroconducteur (17) ou pour isoler la première borne (3) de l'élément électroconducteur (17),
• dans lequel chaque élément de commutation (6) est adapté pour connecter chaque première borne (3) à l'élément électroconducteur (17) indépendamment des autres éléments de commutation (6),
• les batteries (2) sont connectées en série de sorte que la première borne (3) de chaque batterie (2), excepté une première batterie périphérique (21), est connectée à la deuxième borne (4) d'une autre batterie (2),
• dans lequel la première borne (3) de la première batterie périphérique (21) et la deuxième borne (4) d'une deuxième batterie périphérique (22) fournissent la tension globale des batteries connectées (2),
• dans lequel les éléments de commutation (6) sont prévus pour connecter les premières bornes (3) de toutes les batteries (2) et la deuxième borne (4) de la deuxième batterie périphérique (22) à l'élément électroconducteur (17),
• dans lequel la deuxième borne (4) de chaque batterie (2) excepté la deuxième batterie périphérique (22) peut être connectée électriquement à l'élément électroconducteur (17) seulement par l'intermédiaire de la première borne (3) d'une batterie adjacente (2) avec laquelle la deuxième borne (4) est en contact, et
• dans lequel la première borne (3) et la deuxième borne (4) de chaque batterie (2) correspondent à au moins une partie d'une surface extérieure de la batterie (2), dans lequel au moins une partie de ladite surface extérieure correspondant à la première borne (3) peut être connectée électriquement à l'élément électroconducteur (17) par l'intermédiaire de l'élément de commutation (6).

2. Système de batterie (1) selon la revendication 1, **caractérisé en ce que** l'élément électroconducteur (17) est une plaque, en particulier une plaque métallique, qui est en contact avec au moins une partie d'une surface extérieure des batteries (2).

3. Système de batterie (1) selon la revendication 2, **caractérisé en ce que** l'élément électroconducteur (17) est une plaque de refroidissement (5) adaptée pour refroidir les batteries (2), dans lequel la plaque de refroidissement (5) comprend de préférence des canaux de refroidissement (10) pour transporter un fluide de refroidissement.

4. Système de batterie (1) selon l'une quelconque des revendications précédentes, **caractérisé en ce que**

• chaque élément de commutation (6) comprend un élément chauffant (7), au moins une couche isolante (8) et de préférence au moins une couche de soudure,
• dans lequel la couche isolante (8) isole l'élément électroconducteur (17) de la première borne (3), et
• dans lequel l'élément chauffant (7) est adapté pour faire fondre la couche isolante (8) et/ou la couche de soudure (9) de sorte que l'élément électroconducteur (17) et la première borne (3) sont connectés électriquement.

5. Système de batterie (1) selon l'une quelconque des revendications 1 à 4, **caractérisé en ce que** l'élément de commutation (6) est un dispositif semi-conducteur (11).

6. Système de batterie (1) selon l'une quelconque des revendications précédentes, **caractérisé en ce que** l'élément électroconducteur (17) présente une résistance entre 20 $\mu\Omega$ et 150 $\mu\Omega$, en particulier 50 $\mu\Omega$ et 100 $\mu\Omega$, et/ou les éléments de commutation (6) présentent une résistance électrique d'un maximum de 50 $\mu\Omega$, en particulier d'un maximum de 30 $\mu\Omega$.

# Fig. 1

# Fig. 2

## Fig. 3a

## Fig. 3b

## Fig. 4

## Fig. 5

**Fig. 6**

**Fig. 7**

**Fig. 8**

**Fig. 9**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010008010 A1
- DE 102012005979 B4
- DE 102013204526 A1
- US 2012187914 A1